# EUROPÄISCHE PATENTSCHRIFT

(11) **EP 2 478 670 B1**
(45) Veröffentlichungstag und Bekanntmachung des Hinweises auf die Patenterteilung: **17.12.2014**
(21) Anmeldenummer: 10754500.6
(22) Anmeldetag: 15.09.2010
(51) Int. Cl.: H04L 12/40

(54) **VERFAHREN UND VORRICHTUNG ZUM AUFWECKEN VON TEILNEHMERN EINES BUSSYSTEMS UND ENTSPRECHENDER TEILNEHMER**
METHOD AND DEVICE FOR WAKING USERS OF A BUS SYSTEM AND CORRESPONDING USERS
PROCÉDÉ ET DISPOSITIF POUR ACTIVER DES DISPOSITIFS UTILISATEURS D'UN SYSTÈME DE BUS ET DISPOSITIF UTILISATEUR CORRESPONDANT

(30) Priorität: 16.09.2009 DE 102009041435
(43) Veröffentlichungstag der Anmeldung: 25.07.2012
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2010/063538
(87) Internationale Veröffentlichungsnummer: WO 2011/032979

(56) Entgegenhaltungen:
- DE-A1- 10 358 584
- BOSCH: "CAN Specification version 2.0", INTERNET CITATION, 1991, XP002156917, Gefunden im Internet: URL:http://www.infineon.com/cmc_upload/mig rated_files/document_files/Application_Not es/can2spec.pdf [gefunden am 2001-01-10]

## Beschreibung

### Stand der Technik

Die Erfindung geht aus von einem Verfahren und einer Vorrichtung zum Aufwecken von Teilnehmern eines Bussystems sowie einem entsprechenden Teilnehmer gemäß den Oberbegriffen der unabhängigen Ansprüche.

Steuergeräte im Kraftfahrzeug werden in zunehmendem Maße dauerhaft mit Spannung versorgt (auch Klemme 30-Fähigkeit genannt), um auch bei ausgeschalteter Zündung gewisse Überwachungs- und Steuerfunktionen ausführen zu können. Dies kann z. B. eine Zugangs- und Fahrberechtigung oder der Diagnosefall sein. Zur Reduzierung des Stromverbrauchs werden die Steuergeräte in einen sogenannten Schlafmodus oder Sleepmode gebracht. Dies geschieht entweder durch Abschalten des Spannungsreglers oder durch Eintritt in einen entsprechenden Betriebsmodus des Mikrocontrollers.

Bei Bedarf muss das Steuergerät aufgeweckt werden. Dies geschieht entweder über eine dafür vorgesehene Leitung zu einem Weckeingang des Mikrocontrollers des Teilnehmers oder zu einem Weckeingang des Spannungsreglers. Bei den heute üblicherweise vernetzten Systemen kann dies auch durch eine Aktivität auf den Busleitungen erfolgen.

Nachteilig daran ist, dass entweder zu allen benötigten Steuergeräten eine separate Weckleitung verlegt werden muss oder bei Wecken über den Bus alle, auch die nicht benötigten Steuergeräte durch eine gewollte oder ungewollte Busaktivität, entweder durch Kommunikation auf dem Bus oder Störung auf dem Bus geweckt werden. Heutige CAN-Transceiver können im wesentlichen in zwei Modi betrieben werden, in dem aktiven Modus für die Kommunikation und in dem Sleep-Modus für den stromsparenden Ruhezustand. Das Applikations-Programm kann den gewünschten Betriebmodus einstellen, der Transceiver wechselt auch, insbesondere automatisch vom Sleep-Modus in den aktiven Modus, sobald er auf dem CAN-Bus ein Signal oder eine Signaleigenschaft z.B. ein dominantes Bit erkennt. Während der Transceiver im Sleep-Modus ist, kann der Rest des CAN-Knotens abgeschaltet sein und wird dann wieder eingeschaltet, wenn der CAN-Transceiver in den aktiven Modus wechselt.

Die DE 103 58 584 A1 beschreibt ein Verfahren, wie ein CAN-Transceiver durch eine Schaltung erweitert wird, die 8 bit lange Muster aus einem 8 byte langen Data-Field einer CAN-Botschaft dekodiert. Dadurch kann der CAN-Transceiver in vier Modi betrieben werden. Zusätzlich zu den vorher beschriebenen Modi kommen noch ein weiterer Spar-Modus und ein Zwischen-Modus. Aus dem Sleep-Modus wechselt der Transceiver automatisch in den Spar-Modus, sobald er auf dem CAN-Bus ein dominantes Bit erkennt. Im Spar-Modus erfasst er eine Signaleigenschaft und wechselt in den Zwischen-Modus, wenn er innerhalb einer vorgegebenen Zeitspanne eine Anzahl von Signaleigenschaften, beispielsweise Flanken, erkennt. Aus dem Zwischen-Modus wechselt er erst dann in den aktiven Modus, sobald er in dem 8 byte langen Datenfeld der erneut versendeten CAN-Botschaft, das er hierzu nach einem spezifischen Verfahren dekodiert, ein bestimmtes Muster erkennt. Dieses Weck-Muster wird für jeden CAN-Transceiver getrennt konfiguriert. Der CAN-Identifier dieser Botschaft wird für dieses Verfahren fest vorgegeben. Wenn er das Weck-Muster in dieser Botschaft nicht erkennt, geht er in den Spar-Modus zurück. Im Zwischen-Modus ist der Stromverbrauch nur geringfügig höher als im Spar-Modus, der Rest des CAN-Knotens kann abgeschaltet bleiben. Dadurch werden CAN-Netzwerke möglich, in denen einzelne Knoten kontrolliert im stromsparenden Spar-Modus verbleiben, während die anderen Knoten über den CAN-Bus kommunizieren. Die einzelnen Knoten können selektiv aus dem Spar-Modus aufgeweckt werden. Dies wird auch selektiver Wakeup genannt.

Somit ist es möglich über den in Kraftfahrzeugen verwendeten Bus, insbesondere einen CAN-Bus nur die Steuergeräte selektiv zu wecken, die zur Erfüllung der benötigten Funktionen gebraucht werden.

Aufgabe der Erfindung ist es ein Verfahren und eine Vorrichtung anzugeben, die das selektive Weck-Verfahren so erweitern, dass auch verschiedene Identifier für die Weck-Botschaft programmiert werden können.

### Vorteile der Erfindung

Die Erfindung geht aus von einem Verfahren und einer Vorrichtung zum Aufwecken von Teilnehmern eines Bussystems, wobei ein Zähler vorgesehen ist, der wenigstens eine vorgegebene Signaleigenschaft der auf dem Bussystem übermittelten Signale zählt und bei Erreichen einer vorgebbaren Anzahl den weiteren Aufweckvorgang einleitet.

Vorteilhafter Weise wird als vorgegebene Signaleigenschaft eine Flanke oder ein Flankenwechsel des Signals vorgesehen.
Ebenso kann zweckmäßiger Weise als vorgegebene Signaleigenschaft ein Signalpegel oder eine bestimmte Kombination mehrerer Signalpegel vorgesehen sein.

Insbesondere vorteilhaft ist, dass beim ersten Auftreten der Signaleigenschaft eine Zeitdauer bestimmt wird und sich aus der so bestimmten Zeitdauer nach dem ersten Auftreten aus den Signaleigenschaften, bezogen auf die Zeitdauer, eine binäre Information ergibt, die ein selektives Aufwecken von Teilnehmern des Bussystems ermöglicht.

Dabei kann aus der gewonnenen Information der aufzuweckende Teilnehmer abgelesen werden, wobei dies durch Analyse der Nachricht oder Botschaft, die zum Verlassen des Sleep-Modus geführt hat, oder auch einer erneut gesendeten weiteren Wecknachricht oder Botschaft erfolgen kann.

Vorteilhafter Weise können die am Bus angeschlossenen Steuergeräte so ihre Mikrocontroller ganz abschalten oder in einen Sleep-Modus mit ebenfalls abgeschaltetem Taktgeber bringen, wobei lediglich der am Bus angeschlossene Transceiver, insbesondere CAN-Transceiver geringster Leistungsaufnahme mit einer Stand-By-Stromversorgung versehen werden muss. Durch die Verwendung der Zeitdauer, die beim ersten Auftreten einer der Signaleigenschaften bestimmt wird, kann die Decodierung unabhängig von der verwendeten Übertragungsrate des Bussystems erfolgen, wobei sich durch die Auswertung auch zusätzlich noch Fehler im Blockaufbau bezogen auf die Kommunikationsblöcke im Bussystem erkennen lassen.

Die Konfigurationsmöglichkeiten für das Weckverfahren über den CAN-Transceiver mit selektiver Weck-Funktion werden erfindungsgemäß erweitert durch eine Einstellung, wieviele Flanken im Arbitration-Field und Control-Field der Weck-Botschaft gezählt werden sollen. Jede Botschaft, für die diese Zählung den eingestellten Wert ergibt, wird probehalber als Weck-Botschaft betrachtet (erste Stufe des Verfahrens), vorbehaltlich der erfolgreichen Dekodierung des nach einem bestimmten Verfahren im Data-Field encodierten Weck-Musters (zweite Stufe des Verfahrens).

Der Vorteil dieses Verfahrens liegt darin, dass in der Konfiguration des CAN-Netzwerks der Identifier für die Weck-Botschaft frei gewählt werden kann, zum Beispiel in seiner Priorität im Vergleich zu den anderen Botschaften. Es kann sowohl ein 11-Bit-Identifier als auch ein 29-Bit-Identifier gewählt werden. Verschiedene CAN-Knoten im Netzwerk können auch unterschiedliche Weck-Identifier verwenden, dadurch steigt die Zahl der einzeln aufweckbaren Knoten.

Ein weiterer Vorteil des Verfahrens liegt darin, dass der Taktgeber des Transceivers vor Beginn des Aufweckvorganges abgeschalten sein kann, da für den ersten Schritt des Aufweckverfahrens das anliegende Bussignal selbst als Taktgeber herangezogen wird.

Weitere Vorteile und vorteilhafte Ausgestaltungen ergeben sich aus der Beschreibung sowie den Merkmalen der Ansprüche.

### Zeichnung

Die Erfindung wird anhand der in der Zeichnung dargestellten Figuren näher erläutert.

Dabei zeigt
Figur 1 ein Bussystem mit mehreren, wenigstens zwei Teilnehmern.
Figur 2 zeigt einen erfindungsgemäßen Verfahrensablauf in Form eines Flussdiagramms.
In Figur 3 ist beispielhaft eine Nachricht mit der im Datenfeld eincodierten Weckinformation dargestellt.
Figur 4 schließlich zeigt den erfindungsgemäßen Aufbau eines Blocks im Datenfeld zur Ermittlung der Signaleigenschaft mit eincodierter Information.

### Beschreibung der Ausführungsbeispiele

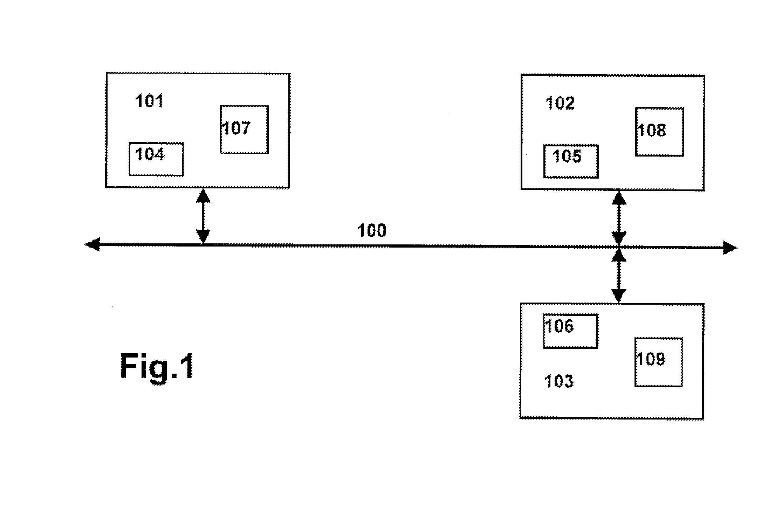

Figur 1 zeigt ein Bussystem 100 mit Busteilnehmern 101, 102 und 103. Diese enthalten jeweils einen Transceiver oder eine Medienanschlusseinheit 107, 108 bzw. 109 sowie Zeiterfassungs- bzw. Zählbaustein mit integriertem Taktgeber 104, 105 oder 106. Dieser kann jeweils außerhalb des entsprechenden Transceivers oder der Medienanschlusseinheit liegen, aber auch als Bestandteil desselben ausgeprägt sein.Wie bereits erwähnt, sollen über den in Kraftfahrzeugen häufig verwendeten CAN-Bus in diesem Ausführungsbeispiel nur die Steuergeräte selektiv geweckt werden, die zur Erfüllung der benötigten Funktionen gebraucht werden. Dabei lassen sich auch Geräte zu Gruppen zusammenfassen, die auf die gleiche Weckinformation reagieren.

Eine Möglichkeit wäre, bestimmte Teile einer Botschaft/eines CAN-Frames (z. B. Identifier) zur Selektion zu verwenden. Dies setzt aber voraus, dass die Weckeinrichtung ständig mit einem in Betrieb befindlichen Taktgeber verbunden ist, der aber einen wesentlichen Teil zum Stromverbrauch beiträgt. Diese Art des Weckens bedingt, dass die Übertragungsrate des Busses bekannt ist und dass der Taktgeber nur sehr geringe Schwankungen durch äußere Einflüsse wie z. B. Versorgungsspannung oder Temperatur usw. haben darf. Die genaue Aufgabe besteht nun darin, ein Selektionsverfahren anzuwenden bzw. zu entwickeln, das mehrstufig arbeitet und in der ersten Stufe ohne in Betrieb befindlichen Taktgeber auskommt.

Die am Bus angeschlossenen Steuergeräte oder Teilnehmer im Ruhezustand, beispielsweise 102 und 103 können ihre Mikrocontroller ganz abschalten oder in einen Zustand mit abgeschaltetem Taktgeber bringen. Auch der Zeiterfassungs- bzw. Zählbaustein mit Taktgeber 105 beziehungsweise 106 wird in einen Sleep-Modus gebracht, in welchem der integrierte Taktgeber abgeschaltet ist. Lediglich der am Bus angeschlossene CAN-Transceiver bzw. die Medienanschlusseinheit geringster Leistungsaufnahme, wird in den Teilnehmern im Ruhezustand, beispielsweise 102 und 103, mit einer Stand-By-Stromversorgung versehen.

Versendet ein Teilnehmer, beispielsweise 101, ein für das Aufwecken der Teilnehmer 102 und / oder 103 charakteristisches Signal auf dem Bus wird der Selektionsmechanismus aktiviert. Im ersten Schritt wechseln die Teilnehmer 102 und 103 in den Spar-Modus und zählen Flanken des gesendeten Bussignals. Der Zeiterfassungs- bzw. Zählbaustein mit Taktgeber 105 bzw. 106 wird aktiviert. Abhängig vom Ergebnis der Flankenzählung erfolgt der Wechsel in den Zwischen-Modus. Im Zwischen-Modus wird unter Zuhilfenahme des Taktgebers 105 bzw. 106 der Inhalt des Datenfeldes dekodiert und mit einer abgelegten Weckadresse verglichen. Bei positivem Ergebnis wechselt der Teilnehmer in den aktiven Modus und es werden z. B. die Mikrocontroller und/oder weitere Spannungsregler der Teilnehmer 102 respektive 103 aktiviert.

Die Erfindung kann gleichermaßen als einstufiges Weckkonzept, bei welchem beide Schritte des Verfahrens basierend auf der Auswertung einer einzigen empfangenen Botschaft durchlaufen werden. Es kann aber auch zweistufiges Weckkonzept, bei welchem die beiden Schritte des Verfahrens basierend auf der Auswertung zweier nacheinander empfangener Botschaften durchlaufen werden, ausgeführt werden, um die Wecksicherheit weiter zu erhöhen.

Reagieren mehrere Geräte auf die gleichen Weckmechanismen, auf die gleichen charakteristischen Signale, so lassen sich auch ganze Gerätegruppen wecken respektive die Geräte zu Gruppen zusammenfassen oder auch spezielle Geräte für spezielle Anwendungen wecken.

Durch den Aufbau der Logik ist es möglich, die Informationen unabhängig von der verwendeten Übertragungsrate auf der Botschaft zu entnehmen, wie später noch näher erläutert wird. Dabei ist die Anzahl der Wechsel zwischen High und Low oder 0 und 1, also der binären Information, weitgehend konstant.

Besonders bevorzugt ist, dass die weckende Botschaft eine nach der CAN-Bus-ISO-Norm aufgebaute Nachricht ist, die diese Norm nicht verletzt und somit in vorhandenen Systemen keine Probleme hervorruft. Ein CAN-Controller, wie er bei anderen Lösungen verwendet wird, ist hier dann nicht nötig.

Die Konfigurationsmöglichkeiten für das Weckverfahren über den CAN-Transceiver mit selektiver Weck-Funktion werden erfindungsgemäß erweitert durch eine Einstellung, wieviele Flanken im Arbitration-Field und Control-Field der Weck-Botschaft gezählt werden sollen. Jede Botschaft, für die diese Zählung den eingestellten Wert ergibt, wird probehalber als Weck-Botschaft betrachtet (erste Stufe des Verfahrens), vorbehaltlich der erfolgreichen Dekodierung des nach dem weiter unten beschriebenen Verfahren im Data-Field encodierten Weck-Musters (zweite Stufe des Verfahrens).

In der Konfiguration des CAN-Netzwerks kann der Identifier für die Weck-Botschaft frei gewählt werden kann, zum Beispiel in seiner Priorität im Vergleich zu den anderen Botschaften. Es kann sowohl ein 11-Bit-Identifier als auch ein 29-Bit-Identifier gewählt werden. Verschiedene CAN-Knoten im Netzwerk können auch unterschiedliche Weck-Identifier verwenden, wodurch die Zahl der einzeln aufweckbaren Knoten steigt. Falls, wie in diesem Beispiel lediglich Arbitration-Field und Control-Field ausgewertet werden, steht das Ergebnis der ersten Stufe des Weck-Verfahrens rechtzeitig zur Verfügung, um die zweite Stufe, also die Decodierung des Weckmusters im Data-Field, noch anhand derselben Botschaft durchzuführen.

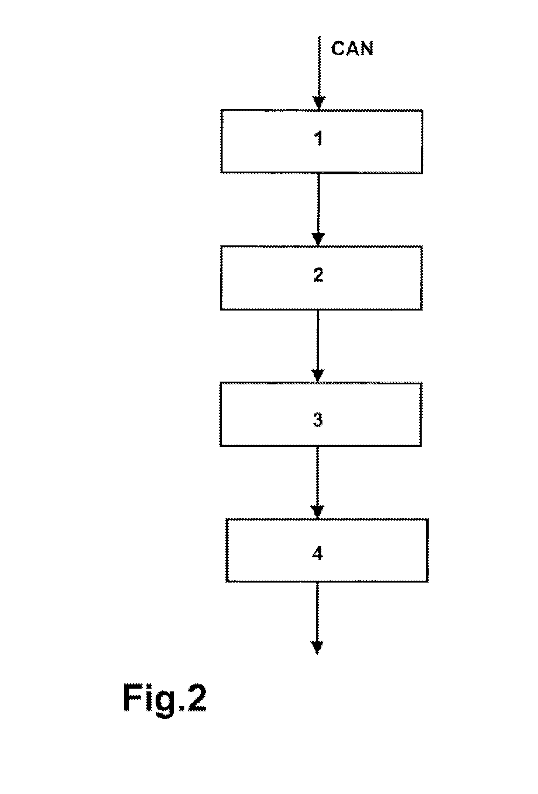

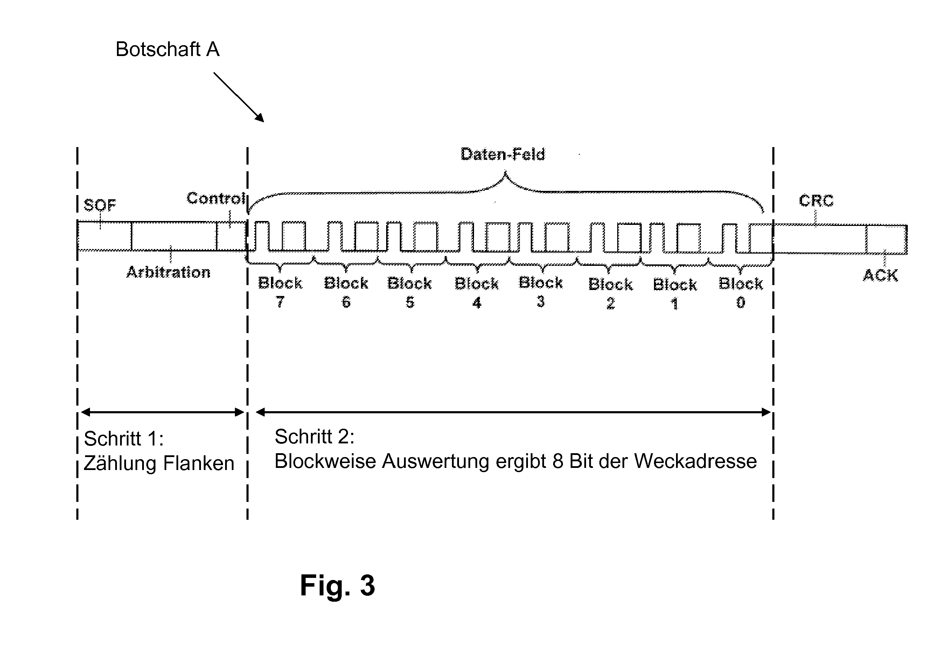

In Figur 2 ist der prinzipielle Ablaufplan als ein Beispiel dargestellt. Figur 3 stellt das Format der Weckbotschaft und die beiden Schritte des Weckvorgehens beispielhaft dar. Der Sender der Weckanforderung schickt eine Botschaft A entsprechend Figur 3, in der der zu weckende Empfänger oder die Empfängergruppe mit einer Nummer eincodiert ist, auf den Bus, wie hier im Beispiel einem CAN-Bus. Im Ruhezustand ist der Bus rezessiv. Wenn die erste Nachricht kommt, was sich am Wechsel auf dominant erkennen lässt und in Block 1 von Figur 2 geschieht, wird ein Zähler aktiviert. Über eine bestimmte Zeit, beispielsweise während des Arbitration-Field und des Control-Field, werden dann die Anzahl der Flanken der Nachricht in Block 2 der Figur 2 gezählt. Zur Synchronisation auf den Bustakt wird nach dem weiter unten geschilderten Verfahren des Bitstrom des Busses ausgewertet.

Liegt die ermittelte Anzahl an Flanken innerhalb der zulässigen Grenzen, wird der zweite Teil der Schaltung aktiviert. Dadurch wird eine erste Trennung von Kommunikation bzw. Störung auf den Bus und einer Weckanforderung erreicht. Fällt dieser Vergleich positiv aus, handelt es sich also um eine Weckanforderung, wird die zweite Stufe der Logik mit Strom versorgt. Nun liest die Wake-Up-Logik, also insbesondere die verarbeitende Einheit unter Nutzung des Zeiterfassungs- bzw. Zählbausteins 105 bzw. 106 aus dem Data-Field gemäß dem weiter unten geschilderten Verfahren die Nummer des Gerätes oder der Gerätegruppe aus, die geweckt werden soll. Dies erfolgt in Block 3 der Figur 2. Stimmt die ausgelesene Nummer mit einer gespeicherten überein, so wird das Gerät über Aktivieren der Spannungsregler oder Wecken des Mikrocontrollers in Block 4 von Figur 2 aktiviert und der entsprechende Teilnehmer nimmt am Busverkehr teil. In diesem Flussdiagramm ist das zweistufige Weckverfahren mit der Kombination der Blöcke 2 und 3, wie oben beschrieben, dargestellt. Ebenso ist es möglich, auch nur eine der beiden Stufen als Weckkriterium zu benutzen.

Mit z.B. fünf Konfigurations-Bits kann die maximal mögliche Zahl von Flanken im kombinierten Arbitration- und Control-Field eines CAN-Data-Frames mit 29-Bit-Identifier und DLC-8 beschrieben werden. Es können wahlweise alle Flanken gezählt werden oder nur die von dominant zu recessive oder die von recessive zu dominant. In einem geeigneten Speicherbereich werden der Zielwert oder ein zulässiges Intervall für die in einer Weckbotschaft erwarteten Flanken abgelegt und für den ersten Schritt des Aufweckvorgangs verwendet.

Digitale Schaltungen, die Muster aus seriellen Datenfolgen dekodieren sollen, brauchen dazu einen Takt. Das Ziel des hier beschriebenen Verfahrens ist es, den Strom-Verbrauch des Transceivers für die Zeit zu minimieren, bevor er das Weck-Muster erkannt hat. Daher wird der Takt angehalten, wenn er nicht zur Dekodierung benötigt wird und neu gestartet, sobald der Beginn einer Botschaft (dominantes SOF-Bit) erkannt wird.

Das besondere Dekodier-Verfahren für das Weck-Muster im Data-Field einer CAN-Botschaft erlaubt eine deutlich höhere Takt-Toleranz als das CAN-Protokoll selbst. Trotzdem braucht ein Oszillator Zeit, sich nach seinem Start hinreichend zu stabilisieren.

Daher wird für die Zählung der Flanken im Arbitration-Field und Control-Field nicht der Takt des Oszillators verwendet, sondern der Datenstrom vom CAN-Bus selbst wird als Takt verwendet. Dieser Datenstrom kann seriell verwendet werden. Dies ist die erste Stufe des Weck-Verfahrens. Dadurch hat der Oszillator mindestens 18 CAN Bit-Zeiten (36 µs bei 500 kbit/s) Zeit, sich zu stabilisieren, bevor dann mit diesem Takt versucht wird, in der zweiten Stufe des Weck-Verfahrens das Weck-Muster zu dekodieren. Dazu wird der CAN-Transceiver in den Zwischen-Modus geschaltet.

Dieses zweistufige Dekodier-Verfahren kann einen CAN-Transceiver mit einer einzigen CAN-Botschaft aus dem Spar-Modus in den aktiven Modus bringen und den Rest des CAN-Knotens aufwecken.

Verschiedene Bedingungen können definiert werden, wann der Oszillator des Transceivers wieder angehalten wird:
1. Der Transceiver schaltet in den aktiven Modus.
2. Der Zähler der Flanken erreicht einen bestimmten Wert. Dieser Wert ergibt sich aus dem konfigurierten Wert der Flanken im Arbitration- und Control-Field plus einer Konstante, denn die besondere Form der Weck-Muster-Codierung bedingt eine konstante Zahl von Flanken in einem gültigen Weck-Muster.
3. Eine Zeitschaltung (z.B. RC-Glied) ab SOF-Bit
4. Der CAN-Bus bleibt für mehr als ca. sechs CAN Bit-Zeiten auf dem rezessiven Pegel (gemessen mit z.B. RC- Glied).

Figur 3 beschreibt das Vorgehen in der zweiten Stufe des Weckverfahrens. Entsprechend Figur 3 ist die Botschaft A in einer bevorzugten Form als CAN-Bus-ISO-Norm aufgebaute Botschaft eingesetzt. Dabei ist ein Start of Frame, SOF, ein Abitration-Feld, das in der Regel den Identifier enthält, und ein Kontrollfeld vor dem Datenfeld vorgesehen. Im Anschluss an das Datenfeld ist eine Prüfziffer als Cyclic-Redundancy-Check CRC und ein Bestätigungsfeld bezüglich der Nachrichtenübertragung, ein Acknowledgement ACK enthalten. Die Botschaft A enthält die Nummer des Gerätes oder der Gerätegruppe im Datenfeld. Als CAN-Identifier kann irgendeine gültige CAN-Adresse verwendet werden. Damit entspricht der Rahmen oder das Frame der CAN-Bus-Spezifikation, und die Kommunikation anderer Geräte über den CAN-Bus wird nicht gestört.

Das gesamte Datenfeld, wie in Figur 3 dargestellt, im Rahmen insbesondere im CAN-Frame besteht hier aus 64 Bit, unterteilt in 8 Blöcke, also Block 0 bis Block 7. In jedem Block ist dabei wenigstens 1Bit der Gerätenummer eincodiert. Ist in jedem Block dabei genau 1Bit der Gerätenummer eincodiert, kann die Schaltung aus einem CAN-Frame, wie dargestellt, 8 Bits für die weitere Verarbeitung gewinnen. Durch die Verschachtelung dieser 8 Bits können Fehler in der Übertragung erkannt werden.

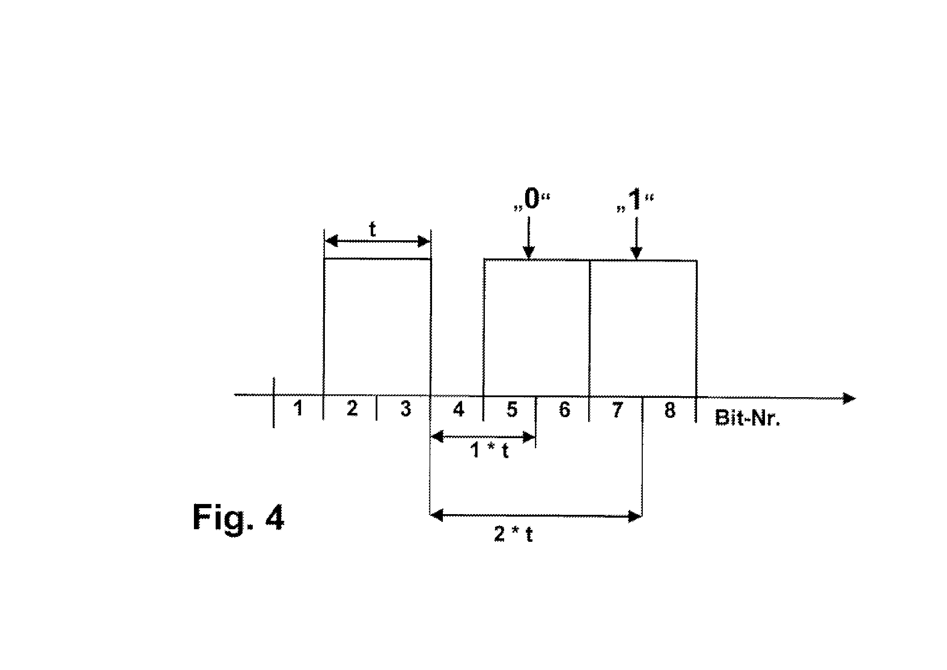

Der besondere Aufbau der einzelnen Blöcke 0 bis 7 aus Figur 3 ist in Figur 4 dargestellt. Durch diesen besonderen Aufbau der 8 Blöcke kann die Codierung unabhängig von der verwendeten Übertragungsrate des Busses erfolgen. Zusätzlich lassen sich noch Fehler im Blockaufbau erkennen. Dabei entspricht ein Block 8 Bits aus dem CAN-Datenfeld.

Der Aufbau eines Blocks ist beispielhaft in Figur 4 dargestellt. Dabei sind die Bits 2 und 3 auf High, um eine Zeit t zu messen bzw. zu bestimmen. Nach dem Ende von Bit 3 wartet die Wake-Up-Logik oder die Verarbeitungseinheit, die vorab bestimmte Zeit t einmal ab und speichert den Zustand, der dann auftritt, wartet noch einmal die Zeit t ab und speichert wieder den dann auftretenden erneuten Zustand. Dabei kann die Zeit t und 2t, wie in Figur 4 dargestellt, so gewählt werden, dass voll High- oder Low-Signal im Rahmen der Signalpegel erkannt werden können. Gleichermaßen ist eine Erkennung der Signalflanken, beispielsweise von Bit 4 auf Bit 5 und Bit 6 auf Bit 7 durch entsprechende Wahl der jeweiligen Zeitabschnitte denkbar. Damit ergibt sich unabhängig von der verwendeten Übertragungsrate eine Codierungsmöglichkeit für eine 0-Information, hier in Bit 5 und 6 sowie eine 1-Information, hier über Bit 7 und 8.

D. h. in der beispielhaften Codierung in Figur 4 ist Bit 1 immer 0, Bit 2 und Bit 3 sind immer 1, zum Einmessen der Zeit t, Bit 4 ist wiederum immer 0 zur Trennung zwischen der Einmesszeit und der eigentlichen binären Information. Bit 5 und 6 sind hier so gewählt, dass diese auf High sind, was dann für den Block eine logische 0 bedeutet. Bit 7 und 8 sind dann so gewählt, was für den Block eine logische 1 bedeuten würde. D. h. sind Bit 5 und 6 auf 1, enthält der Block eine logische 0, und sind Bit 7 und 8 auf 1, so enthält der Block eine logische 1. D. h. die Bits werden hier so gesetzt, dass entweder die Bits 5 und 6 auf 1 sind oder die Bits 7 und 8. D. h. das hier genannte Verfahren zeigt eine baudrahtenunabhängige Übertragung, insbesondere durch Zählen von Flanken oder Flankenwechseln respektive der entsprechende Signalpegel gemäß der jeweils vorgegebenen Signaleigenschaft; zum Einen als erste Weckstufe und bei der Auswertung der eincodierten binären Informationen in derselben Botschaft als zweite, selektive Weckstufe in einem mehrstufigen Konzept. Die vorgegebene Signaleigenschaft kann dabei, wie bereits erwähnt, zum Einen der Signalpegel, also 0 oder 1 wie im Beispiel der Figur 4 sein, aber auch, wie bereits dargelegt, die Auswertung der Signalflanken oder des Signalflankenwechsels. Damit ergibt sich eine einfache Möglichkeit, Steuergeräte selektiv zu wecken, ohne zusätzlichen Leitungsaufwand zu haben und ohne immer alle auch nicht benötigte Teilnehmer des Bussystems in die Stromaufnahme zu bringen.

Die hier beschriebenen CAN-Transceiver können für CAN und/oder für TTCAN Netzwerke verwendet werden.

## Patentansprüche

1. Vorrichtung zum Aufwecken von Teilnehmern (101,102,103) eines CAN-Bussystems (100), wobei ein Erfassungsmittel (104,105,106) vorgesehen ist, das wenigstens eine vorgegebene Signaleigenschaft der auf dem Bussystem übermittelten Signale erfasst und bei Erreichen einer vorgebbaren Anzahl, bezogen auf die Signaleigenschaft, den weiteren Aufweckvorgang einleitet, **dadurch gekennzeichnet, dass** der Datenstrom vom CAN-Bus selbst als Taktgeber zur Erkennung der Signaleigenschaft verwendet wird.

2. Vorrichtung nach Anspruch 1, **dadurch gekennzeichnet, dass** als eine vorgegebene Signaleigenschaft eine Flanke oder ein Flankenwechsel des Signals erfasst wird.

3. Vorrichtung nach Anspruch 1, **dadurch gekennzeichnet, dass** als eine vorgegebene Signaleigenschaft ein Signalpegel oder eine bestimmte Kombination mehrerer Signalpegel erfasst wird.

4. Vorrichtung nach einem der Ansprüche 1 bis 3, **dadurch gekennzeichnet, dass** ein Zähler zumindest zum Zählen des Auftretens einer der wenigstens einen Signaleigenschaft vorgesehen ist.

5. Vorrichtung nach einem der Ansprüche 1 bis 3, **dadurch gekennzeichnet, dass** die vorgebbare Anzahl, bei deren Erreichen der weitere Aufweckvorgang eingeleitet wird, durch Beschreiben eines hierfür vorgesehenen Speicherbereiches konfiguriert werden kann.

6. Vorrichtung nach einem der Ansprüche 1 bis 3, **dadurch gekennzeichnet, dass** ein Zähler oder Timer zumindest zum Erfassen der Zeitdauer zwischen zwei Erfassungszeitpunkten von Signaleigenschaften vorgesehen ist.

7. Vorrichtung nach einem der vorangegangenen Ansprüche, **dadurch gekennzeichnet, dass** für den weiteren Aufweckvorgang mindestens ein Verlauf, ein Muster oder eine Abfolge wenigstens einer Signaleigenschaft erfasst wird und mit wenigstens einem in einem hierfür vorgesehenen Speicher abgelegten Verlauf, Muster oder einer Abfolge verglichen wird.

8. Vorrichtung nach einem der vorangegangenen Ansprüche, **dadurch gekennzeichnet, dass** vor Beginn des Aufweckvorganges der in der Vorrichtung vorgesehene Zähler oder Timer beziehungsweise der zugehörige Taktgeber abgeschaltet ist.

9. Verfahren zum Aufwecken von Teilnehmern eines CAN-Bussystems, wobei wenigstens eine vorgegebene Signaleigenschaft der auf dem Bussystem übermittelten Signale erfasst wird und bei Erreichen einer vorgebbaren Anzahl bezogen auf die Signaleigenschaft der weitere Aufweckvorgang eingeleitet wird, **dadurch gekennzeichnet, dass** der Datenstrom vom CAN-Bus selbst als Taktgeber zur Erkennung der Signaleigenschaft verwendet wird.

10. Verfahren nach Anspruch 9, **dadurch gekennzeichnet, dass** eine beliebige Botschaft gesendet wird und diese als Aufweckbotschaft ausgewertet wird, indem aus der Botschaft eine oder mehrere der wenigstens einen Signaleigenschaft erfasst und ausgewertet werden.

11. Verfahren nach Anspruch 10, **dadurch gekennzeichnet, dass** eine der wenigstens einen Signaleigenschaft durch einen Zähler gezählt und mit mindestens einem Schwellwert oder Grenzwert verglichen wird und abhängig vom Ergebnis des Vergleiches der Weckvorgang eingeleitet beziehungsweise durchgeführt wird oder nicht.

12. Verfahren nach Anspruch 9, **dadurch gekennzeichnet, dass** beim Auftreten einer der wenigstens einen Signaleigenschaft eine Zeitdauer bestimmt wird.

13. Verfahren nach Anspruch 12, **dadurch gekennzeichnet, dass** aus dem Wert einer der mindestens einen Signaleigenschaft nach wenigstens einmaligem erneutem Ablauf der zuvor ermittelten Zeitdauer eine binäre Information ermittelt wird, dass aus mehreren der auf diese Weise ermittelten binären Informationen ein Verlauf oder eine Abfolge oder ein Muster einer Signaleigenschaft erstellt wird und mit mindestens einem abgelegten Verlauf oder einer abgelegten Abfolge oder einem abgelegten Muster verglichen wird, und dass abhängig vom Ergebnis des Vergleichs der Weckvorgang eingeleitet beziehungsweise durchgeführt wird oder nicht.

14. Verfahren nach Anspruch 9, **dadurch gekennzeichnet, dass** in einem ersten Schritt eine der wenigstens einen Signaleigenschaft durch einen Zähler gezählt und mit mindestens einem Schwellwert oder Grenzwert verglichen wird und abhängig vom Ergebnis des ersten Vergleiches der zweite Schritt des Weckvorgangs eingeleitet wird, und dass in einem zweiten Schritt aus dem Wert einer der mindestens einen Signaleigenschaft eine Zeitdauer ermittelt wird, und nach wenigstens einmaligem erneutem Ablauf der ermittelten Zeitdauer eine binäre Information ermittelt wird , dass aus mehreren der auf diese Weise ermittelten binären Informationen ein Verlauf oder eine Abfolge oder ein Muster einer Signaleigenschaft erstellt wird und mit mindestens einem abgelegten Verlauf oder einer abgelegten Abfolge oder einem abgelegten Muster verglichen wird, und dass abhängig vom Ergebnis des zweiten Vergleichs der Weckvorgang durchgeführt wird oder nicht.

15. Verfahren nach einem der Ansprüche 9 bis 14, **dadurch gekennzeichnet, dass** eine im Ruhezustand empfangene Botschaft als Aufweckbotschaft ausgewertet wird, wobei der erste Schritt des Aufweckverfahrens und der zweite, für einzelne Teilnehmer oder Gruppen von Teilnehmern selektive Schritt des Aufweckverfahrens durch Auswertung derselben, einmalig empfangenen Botschaft durchgeführt werden

16. Verfahren nach Anspruch 9 bis 14, **dadurch gekennzeichnet, dass** Aufweckbotschaften mehrfach versendet werden und dass eine im Ruhezustand empfangene Botschaft als Aufweckbotschaft ausgewertet wird und dass die Botschaft nach Einleitung des weiteren Aufweckvorganges auf einen erneuten Empfang der Aufweckbotschaft gewartet wird und nach erneutem Empfang der zweite, für einzelne Teilnehmer oder Gruppen von Teilnehmern selektive Schritt des Aufweckverfahrens durchgeführt wird.

17. Teilnehmer eines Bussystems mit einer Vorrichtung gemäß einem der Ansprüche 1 bis 8.

## Claims

1. Apparatus for waking subscribers (101, 102, 103) in a CAN bus system (100), wherein a sensing means (104, 105, 106) is provided that senses at least one prescribed signal property of the signals transmitted on the bus system and, when a prescribable number, in relation to the signal property, is reached, initiates the further waking process, **characterized in that** the data stream is used by the CAN bus itself as a clock generator for identifying the signal property.

2. Apparatus according to Claim 1, **characterized in that** an edge or an edge change of the signal is sensed as a prescribed signal property.

3. Apparatus according to Claim 1, **characterized in that** a signal level or a particular combination of a plurality of signal levels is sensed as a prescribed signal property.

4. Apparatus according to one of Claims 1 to 3, **characterized in that** a counter is provided at least for counting the occurrence of one of the at least one signal properties.

5. Apparatus according to one of Claims 1 to 3, **characterized in that** the prescribable number that, when reached, prompts initiation of the further waking process can be configured by writing to a memory area provided for this purpose.

6. Apparatus according to one of Claims 1 to 3, **characterized in that** a counter or timer is provided at least for sensing the period of time between two sensing instants for signal properties.

7. Apparatus according to one of the preceding claims, **characterized in that** for the further waking process at least one profile, one pattern or one sequence for at least one signal property is sensed and is compared with at least one profile, pattern or one sequence that is stored in a memory provided for this purpose.

8. Apparatus according to one of the preceding claims, **characterized in that** before the beginning of the waking process the counter or timer, or the associated clock generator, provided in the apparatus is switched off.

9. Method for waking subscribers in a CAN bus system, wherein at least one prescribed signal property of the signals transmitted on the bus system is sensed and, when a prescribable number in relation to the signal property is reached, the further waking process is initiated, **characterized in that** the data stream is used by the CAN bus itself as a clock generator for identifying the signal property.

10. Method according to Claim 9, **characterized in that** an arbitrary message is sent and said message is evaluated as a waking message by virtue of one or more of the at least one signal properties being sensed and evaluated from the message.

11. Method according to Claim 10, **characterized in that** one of the at least one signal properties is counted by a counter and is compared with at least one threshold value or limit value, and the result of the comparison is taken as a basis for initiating and performing or not initiating and performing the waking process.

12. Method according to Claim 9, **characterized in that** the occurrence of one of the at least one signal properties prompts determination of a period of time.

13. Method according to Claim 12, **characterized in that** a piece of binary information is ascertained from the value of one of the at least one signal properties after the previously ascertained period of time has elapsed again at least once, **in that** a profile or a sequence or a pattern for a signal property is produced from a plurality of the pieces of binary information ascertained in this manner and is compared with at least one stored profile or one stored sequence or one stored pattern, and **in that** the result of the comparison is taken as a basis for initiating and performing or not initiating and performing the waking process.

14. Method according to Claim 9, **characterized in that** a first step involves one of the at least one signal properties being counted by a counter and being compared with at least one threshold value or limit value, and the result of the first comparison being taken as a basis for initiating the second step of the waking process, and **in that** a second step involves a period of time being ascertained from the value of one of the at least one signal properties, and a piece of binary information being ascertained after the ascertained period of time has elapsed again at least once, **in that** a profile or a sequence or a pattern for a signal property is produced from a plurality of the pieces of binary information ascertained in this manner and is compared with at least one stored profile or one stored sequence or one stored pattern, and **in that** the result of the second comparison is taken as a basis for performing or not performing the waking process.

15. Method according to one of Claims 9 to 14, **characterized in that** a message received in the quiescent state is evaluated as a waking message, wherein the first step of the waking method and the second step of the waking method, which second step is selective for individual subscribers or groups of subscribers, are performed by evaluating the same message received once.

16. Method according to Claims 9 to 14, **characterized in that** waking messages are sent repeatedly and **in that** a message received in the quiescent state is evaluated as a waking message and **in that** initiation of the further waking process is followed by a wait for fresh reception of the waking message, and fresh reception is followed by the second step of the waking method, which second step is selective for individual subscribers or groups of subscribers, being performed.

17. Subscriber in a bus system having an apparatus according to one of Claims 1 to 8.

## Revendications

1. Dispositif de réveil de participants (101, 102, 103) d'un système de bus CAN (100), qui présente un moyen de saisie (104, 105, 106) qui saisit au moins une propriété prédéterminée de signaux transmis sur le système de bus et lance la poursuite de l'opération de réveil lorsqu'un nombre prédéterminé est atteint pour ce qui concerne la propriété du signal,
**caractérisé en ce que**
le flux de données du bus CAN proprement dit est utilisé comme cadence d'horloge dans la détection de la propriété du signal.

2. Dispositif selon la revendication 1, **caractérisé en ce que** la propriété prédéterminée du signal qui est saisie est un flanc ou un changement de flanc du signal.

3. Dispositif selon la revendication 1, **caractérisé en ce que** la propriété prédéterminée du signal qui est saisie est le niveau du signal ou une combinaison définie de plusieurs niveaux du signal.

4. Dispositif selon l'une des revendications 1 à 3, **caractérisé en ce qu'**un compteur est prévu au moins pour compter l'apparition d'au moins une parmi la ou les propriétés du signal.

5. Dispositif selon l'une des revendications 1 à 3, **caractérisé en ce que** le nombre prédéterminé qui lance la poursuite de l'opération de réveil lorsqu'il est atteint, peut être configuré par écriture dans une partie de mémoire prévue dans ce but.

6. Dispositif selon l'une des revendications 1 à 3, **caractérisé en ce qu'**un compteur ou une horloge sont prévus au moins pour détecter la durée qui s'écoule entre deux instants de saisie des propriétés du signal.

7. Dispositif selon l'une des revendications précédentes, **caractérisé en ce que** pour la poursuite de l'opération de réveil, au moins une évolution, un motif ou une succession d'au moins une des propriétés du signal sont saisis et comparés à au moins une évolution, un motif ou une succession conservée dans une mémoire prévue dans ce but.

8. Dispositif selon l'une des revendications précédentes, **caractérisé en ce qu'**avant le début de l'opération de réveil, le compteur, l'horloge ou le cadenceur associés prévus dans le dispositif sont débranchés.

9. Procédé de réveil de participants à un système de bus CAN, dans lequel au moins une propriété prédéterminée des signaux transmis sur le système de bus est saisie et la poursuite de l'opération de réveil est lancée lorsqu'un nombre prédéterminé est atteint en termes de propriétés du signal,
**caractérisé en ce que**
le flux de données du bus CAN proprement dit est utilisé comme cadenceur pour la détection de la propriété du signal.

10. Procédé selon la revendication 9, **caractérisé en ce qu'**un message quelconque est envoyé et **en ce que** ce dernier est évalué comme message de réveil en saisissant et évalué dans le message une ou plusieurs parmi la ou les propriétés du signal.

11. Procédé selon la revendication 10, **caractérisé en ce que** l'une parmi la ou les propriétés du signal est comptée par un compteur et est comparée à au moins une valeur de seuil ou une valeur limite, l'opération de réveil étant lancée ou exécutée ou non selon le résultat de la comparaison.

12. Procédé selon la revendication 9, **caractérisé en ce qu'**une durée est déterminée lors de l'apparition de l'une parmi la ou les propriétés du signal.

13. Procédé selon la revendication 12, **caractérisé en ce qu'**à partir de la valeur de la ou d'une des propriétés du signal une information binaire est déterminée après au moins un renouvellement de la durée déterminée précédemment, **en ce qu'**à partir de plusieurs de ces informations binaires, une succession ou un motif d'une propriété du signal sont déterminés et comparés à au moins une succession ou un motif conservés en mémoire et **en ce que** l'opération de réveil est lancée et exécutée ou non en fonction du résultat de la comparaison.

14. Procédé selon la revendication 9, **caractérisé en ce que** dans une première étape, une parmi la ou les propriétés du signal est comptée par un compteur et est comparée à au moins une valeur de seuil ou une valeur limite, et **en ce qu'**en fonction du résultat de la première comparaison, la deuxième étape de l'opération de réveil est lancée et **en ce que** dans une deuxième étape, à partir de la valeur d'une parmi la ou les propriétés du signal, une durée est déterminée et **en ce qu'**après au moins une répétition de la durée déterminée, une information binaire est déterminée, **en ce que** plusieurs des informations binaires ainsi déterminées, une évolution, une succession ou un motif d'une propriété du signal est déterminé et comparé à au moins une évolution, une succession ou un motif conservé en mémoire et **en ce qu'**en fonction du résultat de la deuxième comparaison, l'opération de réveil est exécutée ou non.

15. Procédé selon l'une des revendications 9 à 14, **caractérisé en ce qu'**un message reçu à l'état de repos est évalué comme étant un message de réveil, la première étape du procédé de réveil et la deuxième étape, exécutée pour tous les participants ou sélectivement pour certains groupes de participants, du procédé de réveil sont exécutées par évaluation du même message reçu une fois.

16. Procédé selon les revendications 9 à 14, **caractérisé en ce que** des messages de réveil sont envoyés plusieurs fois et **en ce qu'**un message reçu à l'état de repos est évalué comme étant un message de réveil, et **en ce que** le lancement de la poursuite de l'opération de réveil est suivi d'une attente d'une nouvelle réception du message de réveil et après la nouvelle réception, la deuxième étape du procédé de réveil est exécutée sélectivement pour certains participants ou groupes de participants.

17. Participant à un système de bus présentant un dispositif selon l'une des revendications 1 à 8.
